Europäisches Patentamt

European Patent Office

Office européen des brevets

(19)

(11) **EP 0 553 041 B1**

(12) **FASCICULE DE BREVET EUROPEEN**

(45) Date de publication et mention
de la délivrance du brevet:
**12.03.1997 Bulletin 1997/11**

(51) Int Cl.6: **C10B 55/00**, C10B 53/00,
C10B 19/00, C10B 55/02,
B01J 8/02

(21) Numéro de dépôt: **93420023.9**

(22) Date de dépôt: **20.01.1993**

(54) **Procédé de pyrolyse d'effluents fluides et dispositif correspondant**

Verfahren und Vorrichtung zur Pyrolyse von fluiden Effluenten

Process and apparatus for the pyrolysis of fluid effluents

(84) Etats contractants désignés:
**AT BE CH DE DK ES GB IT LI LU NL SE**

(30) Priorité: **22.01.1992 FR 9200847**

(43) Date de publication de la demande:
**28.07.1993 Bulletin 1993/30**

(73) Titulaire: **LE CARBONE LORRAINE**
**F-92400 Courbevoie (FR)**

(72) Inventeurs:
- **Coulon, Michel**
 **F-95130 Montmorency (DE)**
- **Boucher, Jacques**
 **F-95100 Argenteuil (FR)**

(74) Mandataire: **Séraphin, Léon**
**PECHINEY**
**28, rue de Bonnel**
**69433 Lyon Cedex 03 (FR)**

(56) Documents cités:
EP-A- 0 235 473      DE-B- 1 042 528
FR-A- 2 198 781      US-A- 2 494 695
US-A- 4 823 711

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

DOMAINE DE L'INVENTION

L'invention concerne un procédé de pyrolyse d'effluents fluides et un dispositif pour mettre en oeuvre le procédé.

ART ANTERIEUR

On connaît par le brevet US n° 4 982 039 un procédé de conversion pyrolytique de composés organiques halogénés en hydrogène halogéné en pyrolysant ces composés organiques en atmosphère réductrice.

Par ailleurs, dans l'EP-235473-A est décrit un procédé de destruction de déchets organiques chlorés, les PCB (polychlorobiphényls) en particulier, dans lequel les déchets sont injectés dans un brûleur alimenté en oxygène et hydrogène, en présence d'eau de manière à réaliser un cracking à la vapeur dans la chambre de combustion.

La demande européenne EP n° 90148-A décrit un procédé de combustion ou de décomposition pyrolytique de déchets toxiques, éventuellement radioactifs, dans lequel les déchets sont traités dans un réacteur chauffé contenant un lit de granulés agités mécaniquement et qui circulent au sein dudit lit.

Le brevet américain US n° 4823711 décrit un dispositif de décomposition thermique de produits organiques, en présence ou non d'oxygène. Dans ce dispositif, les produits sont chauffés progressivement, jusqu'à la zone de réaction, par passage dans des zones intermédiaires de préchauffage qui peuvent contenir un lit de sphères pour améliorer le transfert thermique et le mélange des réactifs. Les parois de la zone de réaction et les zones intermédiaires sont chauffées à l'aide de sources de chaleur entourant la zone de réaction.

Le brevet américain US n° 2494695 décrit un dispositif permettant la fabrication, par lots, de coke de pétrole par pyrolyse de produits carbonés tels que des huiles. Ce dispositif comprend une chambre de cokéfaction qui contient initialement des sphères métalliques chaudes et dans laquelle on injecte les produits carbonés jusqu'à ce qu'un dépôt important de coke se soit formé sur les sphères. Les sphères sont alors évacuées, débarassées de leur dépôt de coke, chauffées à l'air chaud, puis réintroduites dans la chambre de cokéfaction.

PROBLEME POSE

Le traitement des effluents, en particulier des effluents toxiques, devient une préoccupation majeure des sociétés industrielles.

Par ailleurs, les techniques de traitement elles-mêmes doivent satisfaire à des exigences toujours plus grandes, que ce soit en ce qui concerne les produits formés durant le traitement, l'économie générale des procédés impliqués (taille des installations, facilité de mise en oeuvre des procédés, consommation de produits ou d'énergie, etc...), ou surtout la polyvalence et souplesse d'utilisation qui permet le traitement d'un large éventail d'effluents, tous les effluents ne pouvant pas être traités dans les mêmes conditions, et en particulier pas à la même température.

A cet égard, les procédés de l'art antérieur ne répondent pas de manière satisfaisante à l'ensemble de ces critères, en particulier les procédés d'incinération qui conduisent à la formation de quantités très importantes de $CO_2$.

En particulier, les procédés de pyrolyse de l'art antérieur ne traitent pas de manière satisfaisante le problème de l'évacuation des produits solides formés lors de la pyrolyse, ce qui nuit fortement à l'efficacité et à l'économie du procédé (encrassement du dispositif, pertes de transfert de chaleur, baisse rapide du rendement de pyrolyse, etc...).

OBJET DE L'INVENTION

Un premier objet de l'invention est un procédé de pyrolyse d'effluents fluides qui résout les problèmes indiqués précédemment et qui repond aux exigences suivantes :

- les produits formés par la mise en oeuvre du procédé sont soit valorisables en eux-mêmes, soit non toxiques. En particulier, ces produits comprennent peu ou, de préférence, pas de $CO_2$, contrairement aux procédés de traitement d'effluents basés sur la combustion en présence d'oxygène (incinérateurs).
- le procédé selon l'invention consomme peu d'énergie et virtuellement pas de matières consommables.
- le procédé selon l'invention peut fonctionner en régime stationnaire ou quasi-stationnaire.
- enfin, le procédé selon l'invention peut fonctionner à diverses températures, est donc d'une grande souplesse d'utilisation et de fonctionnement, en particulier pour traiter des effluents fluides de nature variée.

Un deuxième objet de l'invention est un dispositif de pyrolyse pour mettre en oeuvre le procédé de l'invention, dispositif qui présente une grande compacité.

Enfin, un troisième objet de l'invention est une unité complète comprenant ledit dispositif de pyrolyse.

## DESCRIPTION DE L'INVENTION

Selon l'invention, le procédé de pyrolyse d'effluents fluides, comprenant l'introduction desdits effluents dans une enceinte de pyrolyse contenant une pluralité d'éléments solides, le chauffage desdits effluents à une température où ils sont transformés en produits solides et gazeux, l'évacuation desdits produits solides et gazeux de ladite enceinte, le captage desdits produits solides à la surface desdits éléments solides durant la transformation desdits effluents, la regénération desdits éléments solides par élimination desdits produits solides déposés sur lesdits éléments solides, la circulation desdits éléments solides, est caractérisé en ce que lesdits éléments solides sont portés à une température supérieure à ladite température de transformation et sont émetteurs de flux thermique, et en ce que lesdits effluents sont chauffés à ladite température de transformation au contact desdits éléments solides, en traversant un empilement desdits éléments solides offrant une surface de contact par unité de volume au moins égale à 10 m2/m3.

## DESCRIPTION DES FIGURES

La figure 1 représente en coupe longitudinale une partie de l'enceinte (10) d'un dispositif de pyrolyse (2), garnie d'éléments solides (11) chauffés par un induction (13). Les effluents fluides (6) à pyrolyser sont représentés par des flèches à tracé continu, les produits gazeux formés (9) sont représentés par des flèche en pointillé et les produits solides formés (8) constituent un dépôt à la surface des éléments solides (11).

La figure 2 représente en coupe longitudinale le dispositif de pyrolyse (2) de l'exemple 1 selon l'invention pour mettre en oeuvre le procédé de pyrolyse en continu selon l'invention.

La figure 3 représente en coupe longitudinale le dispositif de pyrolyse (2) de l'exemple 2 selon l'invention pour mettre en oeuvre le procédé de l'invention en discontinu.

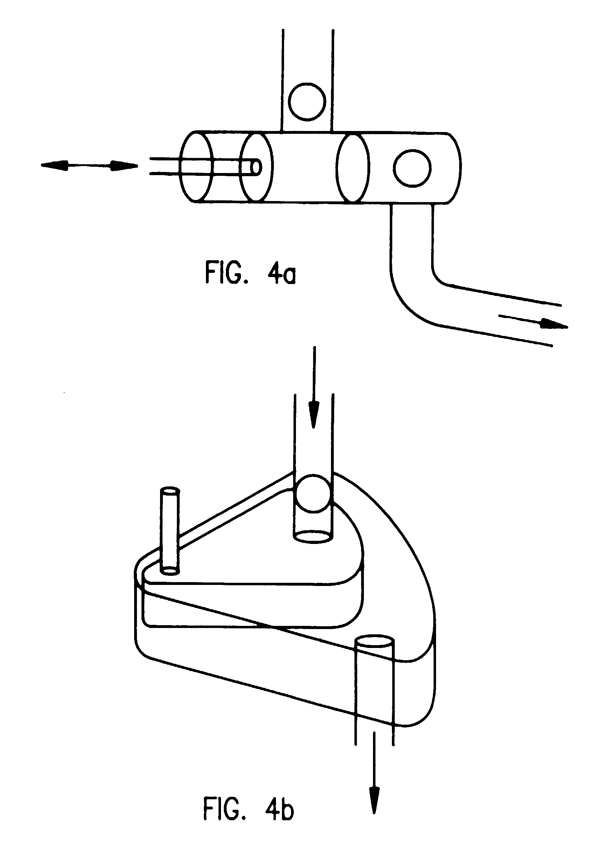

La figure 4a représente en coupe et la figure 4b représente en perspective deux types de sas (14) pour éléments solides (11).

La figure 5 représente en coupe longitudinale un dispositif de gazéification (3) d'effluents en fûts équipé d'une chambre de gazéification (32) et de deux sas, un sas d'entrée (31A) et un sas de sortie (31B).

La figure 6 est une vue en coupe transversale du sas d'entrée (31A) isolé par deux portes (34), dans lequel les fûts (29) sont déplacés à l'aide de vérins (33A, 33B, 33C), et qui peut être placé sous atmosphère déterminée grâce à une prise de vide (36) et une arrivée de gaz (37).

## DESCRIPTION DETAILLEE DE L'INVENTION

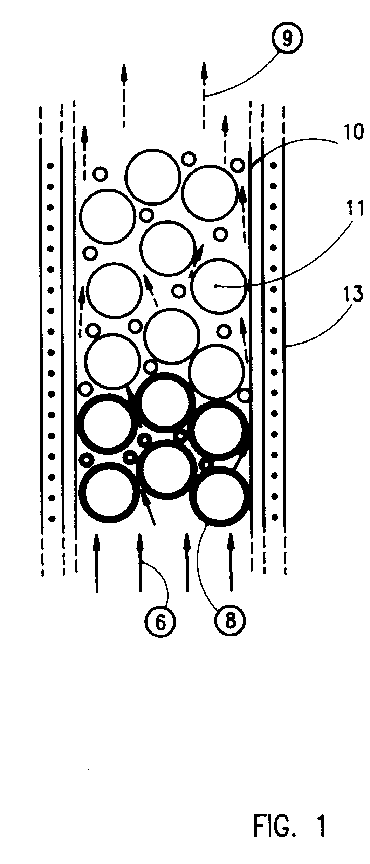

Le procédé repose donc sur le passage d'effluents fluides à traiter à travers un empilement d'éléments solides portés à une température suffisante pour provoquer la transformation souhaitée, généralement une décomposition pyrolytique. De manière générale, il se forme des produits solides qui sont captés à la surface des éléments solides et des produits gazeux qui sont évacués de l'enceinte. La figure 1 schématise ce qui se passe en début de mise en oeuvre du procédé.

Comme il y a formation de produits solides dans l'enceinte durant la transformation des effluents, par recouvrement desdits éléments solides d'une couche de produits solides, il est nécessaire d'évacuer de l'enceinte les produits solides et de régénérer lesdits éléments solides, ce qui peut être réalisé, comme cela sera détaillé ensuite, soit de manière continue, soit de manière discontinue.

Il est préférable pour obtenir une température homogène dans l'enceinte que lesdits éléments solides soient par eux-mêmes émetteurs de flux thermique, et non pas absorbeurs de flux thermique comme ce serait le cas par exemple si ces éléments solides étaient chauffés par rayonnement de la paroi de ladite enceinte portée à très haute température. Ainsi, il faut qu'il y ait un léger gradient thermique positif entre lesdits éléments solides et la paroi de ladite enceinte, lesdits éléments solides étant à température plus élevée que la paroi de ladite enceinte.

Un des problèmes essentiels à résoudre dans un procédé de pyrolyse est l'obtention d'un régime de fonctionnement stable, sans dérive au cours du temps, ce qui suppose notamment qu'il n'y ait pas de détérioration ou d'encrassement des surfaces en contact avec les effluents à traiter ou avec les produits solides ou gazeux formés lors de la pyrolyse.

A cet égard, la demanderesse a observé qu'un gradient thermique positif était très avantageux comparé au cas du gradient thermique négatif (chauffage des éléments solides par une paroi d'enceinte portée à plus haute température) : d'une part le rendement thermique est plus élevé, et surtout ce rendement reste sensiblement stable durant la mise en oeuvre du procédé. En effet, contrairement à ce qui se passe avec un gradient négatif, le rendement thermique et donc le rendement de la pyrolyse est en pratique peu sensible au dépôt de produit solide sur les éléments solides.

Pour obtenir ce gradient thermique positif et pour chauffer lesdits éléments solides au-dessus de ladite température de transformation, la demanderesse a utilisé des techniques de chauffage connues en elles-mêmes, le chauffage par induction ou par conduction électrique (effet Joule), et en choisissant donc des éléments solides comprenant au moins une partie conductrice dans les conditions d'utilisation.

De préférence, les éléments solides sont chauffés par induction.

Par ailleurs, les éléments solides, tout comme la paroi de l'enceinte doivent satisfaire à d'autres exigences, qu'il s'agisse de la tenue du matériau à très haute température, au-delà de 2000°C où des matériaux de réfractarité élevée sont nécessaires, ou qu'il s'agisse de tenue à la corrosion ou à l'abrasion, ou encore de caractéristiques mécaniques, notamment une résistance à l'écrasement dans le cas des éléments solides.

Pour satisfaire l'ensemble de ces exigences, les éléments solides ont de préférence une structure composite et sont constitués typiquement de deux matériaux différents, l'un en matériau conducteur électrique constituant le noyau central dudit élément solide, l'autre en matériau réfractaire constituant une couche externe formant un revêtement dudit noyau et assurant typiquement une tenue à la corrosion, à l'attrition et facilitant aussi l'élimination ultérieure des dépôts de produits solides formés. Un tel élément solide à structure composite est utilisé avec un chauffage à induction.

Mais, on peut aussi, selon la nature des effluents fluides à traiter, et en général dans les conditions de mise en oeuvre peu sévères, utiliser des éléments solides constitués dudit seul matériau conducteur électrique.

On utilise de préférence comme matériau conducteur électrique desdits éléments solides le graphite, les métaux réfractaires, les céramiques conductrices choisies parmi les carbures, siliciures ou borures de métaux.

Ledit matériau réfractaire formant la couche externe dudit noyau central, dans le cas d'un élément solide à structure composite, est choisi parmi le graphite, les métaux réfractaires, les céramiques conductrices ou isolantes choisies parmi les oxydes, carbures, nitrures, siliciures ou borures de métaux.

Selon l'invention, l'élément solide à structure composite est constitué de deux parties, le noyau central et sa couche externe, constituées chacune par des matériaux différents de manière à ce que chaque matériau puisse remplir une fonction spécifique selon la nature des effluents fluides à traiter.

Il est particulièrement important de choisir, à l'aide d'essais exploratoires, un matériau réfractaire, constituant la dite couche externe, adapté à la nature de l'élément solide formé durant la pyrolyse afin que le produit solide formé lors de la pyrolyse et déposé à la surface de ladite couche externe en matériau réfractaire puisse être facilement séparé de l'élément solide, de manière à pouvoir régénérer des éléments solides pratiquement exempts de tout dépôt de produit solide.

Bien que la forme desdits éléments solides puisse être quelconque, il est avantageux que ces éléments solides soient de forme sensiblement sphérique, de manière à présenter la meilleure résistance mécanique et à former un empilement offrant, au passage des effluents fluides, une surface suffisante de contact et formant un type d'empilement automatiquement reproductible.

De préférence, les éléments solides sont de billes de diamètre compris entre 10 et 150 mm, ce qui permet d'avoir simultanément une surface d'échange thermique importante d'au moins 10 m2/m3 et une circulation d'effluents fluides et de produits gazeux avec une faible perte de charge.

Dans le cas d'éléments solides à structure composite, la couche externe, solidaire du noyau central, a, de préférence, une épaisseur comprise entre 0,1 et 2 mm. Comme cette couche joue un rôle lié plutôt à sa surface qu'à son volume, il suffit d'avoir au moins l'épaisseur nécessaire pour que les éléments solides aient une durée de vie raisonnable.

De préférence, en particulier lorsque ledit produit solide est du carbone, on utilise un élément solide composite ayant la forme d'une bille avec un noyau central en graphite et une couche externe en carbure de silicium formant revêtement.

En ce qui concerne ladite enceinte, elle est typiquement de forme tubulaire et en matériau réfractaire ou revêtue intérieurement d'un matériau refractaire choisi parmi le carbure de silicium, l'alumine, l'alumine renforcée, les composites carbone-carbone revêtus de carbure de silicium, le béton.

La mise en oeuvre du procédé, et en particulier la régénération desdits éléments solides, peut se faire selon deux modalités principales, soit de manière discontinue (par "batch"), soit de manière continue.

Dans le procédé discontinu, lesdits éléments solides sont fixes et forment un empilement fixe dans ladite enceinte durant la transformation des effluents fluides.

De préférence, on utilise deux enceintes en alternance de manière à pouvoir éliminer les produits solides déposés sur lesdits éléments solides d'une première enceinte à l'arrêt, tandis qu'une seconde enceinte est en fonctionnement.

Pour éliminer les produits solides déposés, on peut faire appel à différentes techniques soit en traitant mécaniquement les éléments solides par agitation, création de chocs dans ou en dehors de ladite enceinte, de manière à séparer les produits solides déposés.

Dans le cas où le produit solide formé est du carbone, il est bien sûr techniquement possible de le brûler, soit directement dans ladite enceinte, soit en dehors, mais, comme cela a été mentionné, cette modalité n'est pas préféré pour des raisons écologiques (diminution de la teneur atmosphérique en CO2).

Dans le procédé continu, lesdits éléments solides sont mobiles dans l'enceinte mais forment un empilement stationnaire dans l'enceinte durant la transformation des effluents fluides.

Dans ce cas, on introduit des éléments solides dans ladite enceinte à une extrémité dudit empilement et on retire de ladite enceinte, à l'autre extrémité dudit empilement, des éléments solides chargés desdits produits solides, de manière à conserver stationnaire le volume dudit empilement et à assurer aux éléments solides un temps de séjour moyen prédéterminé. Les effluents fluides peuvent circuler soit dans le même sens que les éléments solides soit à contre-courant.

Le procédé continu est le procédé préféré selon l'invention.

Les éléments solides sont généralement chauffés au sein de ladite enceinte elle-même, de préférence par induction, mais il peut être avantageux de dissocier le chauffage des éléments solides et la transformation des effluents fluides.

Ainsi, on peut selon l'invention introduire dans ladite enceinte des éléments solides préchauffés, c'est à dire chauffés en dehors de l'enceinte de pyrolyse proprement dite, de manière à ce que ces éléments solides conservent, compte tenu de leur chaleur spécifique et de leur température initiale, une température sensiblement supérieure à ladite température de transformation durant leur temps de séjour dans ladite enceinte.

Selon l'invention, les températures de transformation se situent, en fonction de la nature des effluents fluides, entre 600 et 2600°C, les éléments solides eux-mêmes peuvent être portés à des températures pouvant aller typiquement de 700 à 3000°C.

Compte tenu de la diversité des effluents fluides susceptibles d'être traités par le procédé selon l'invention, il peut être avantageux d'introduire dans l'enceinte de pyrolyse un gaz ou une vapeur non oxydante en vue de modifier ladite transformation des effluents fluides et ainsi favoriser la formation d'un produit solide ou gazeux particulier, ou encore éviter la formation d'un composé chimique indésirable.

Ainsi, dans le cas d'une pyrolyse de PCB de formule brute $C_{12}H_5Cl_5$, la pyrolyse correspond à la réaction :

$$C_{12}H_5Cl_5 \rightarrow 12\ C + 5\ HCl$$

Il se dépose du carbone sur les éléments solides et il se dégage HCl qui est récupéré en sortie de l'enceinte de pyrolyse. Mais, par exemple dans le cas d'un effluent fluide à traiter où le rapport Cl/H est inférieur à 1, il peut être souhaitable d'introduire de l'hydrogène dans l'enceinte pour obtenir une conversion satisfaisante en HCl.

Un autre objet de l'invention est un dispositif de pyrolyse pour mettre en oeuvre le procédé selon l'invention et qui comprend au moins une enceinte en matériau réfractaire contenant un empilement d'éléments solides, des moyens de chauffages desdits éléments solides, des moyens d'alimentation de l'enceinte en effluents fluides, des moyens d'évacuation desdits produits solides et desdits produits gazeux.

De préférence, le dispositif de pyrolyse comprend une enceinte dans laquelle lesdits éléments solides sont introduits à une extrémité dudit empilement dans ladite enceinte durant la pyrolyse alors que des éléments solides chargés desdits produits solides sont extraits de ladite enceinte, à l'autre extrémité dudit empilement, de manière à déplacer lesdits éléments au sein dudit empilement tout en maintenant ledit empilement en état stationnaire et à assurer un temps de séjour prédéterminé desdits éléments dans ladite enceinte, selon la vitesse de dépôt desdits produits solides sur lesdits éléments solides.

Dans ce type de dispositif, lesdits éléments solides chargés desdits produits solides sont traités hors de ladite enceinte de manière à séparer lesdits produits solides desdits éléments solides et à pouvoir réintroduire lesdits éléments solides régénérés dans ladite enceinte.

Mais le dispositif de pyrolyse peut comprendre aussi deux enceintes fonctionnant en alternance, de manière à pouvoir régénérer lesdits éléments solides d'une enceinte à l'arrêt tandis que l'autre est en fonctionnement.

Quel que soit le type de dispositif, avec une ou deux enceintes, il comporte toujours des moyens de régénération desdits éléments solides. Comme déjà mentionné, des moyens mécaniques pour séparer lesdits produits solides desdits éléments solides sont préférés à la combustion du produit solide, quand ce dernier est du carbone.

Un autre objet de l'invention est une unité de pyrolyse comprenant un dispositif de pyrolyse comme décrit précédemment, un dispositif de gazéification alimentant ledit dispositif de pyrolyse en effluents fluides et un dispositif de traitement desdits produits gazeux sortant dudit dispositif de pyrolyse, ce traitement pouvant consister en une réaction desdits produits gazeux avec au moins un autre produit chimique.

Les effluents à traiter sont rarement entièrement sous forme d'effluents fluides. Cependant dans ce cas, le dispositif de gazéification se réduit à un injecteur et un échangeur thermique de manière à gazéifier les liquides eventuels et à porter les effluents fluides à l'état gazeux à une température légèrement inférieure à la température de transformation avant de les introduire dans ladite enceinte.

Dans le cas plus fréquent où des solides ou bien des liquides lourds, des huiles sont présents dans les effluents à traiter, il est possible d'utiliser les dispositifs connus de gazéification ou celui de l'invention décrit à l'exemple 4.

EXEMPLES

Exemple 1

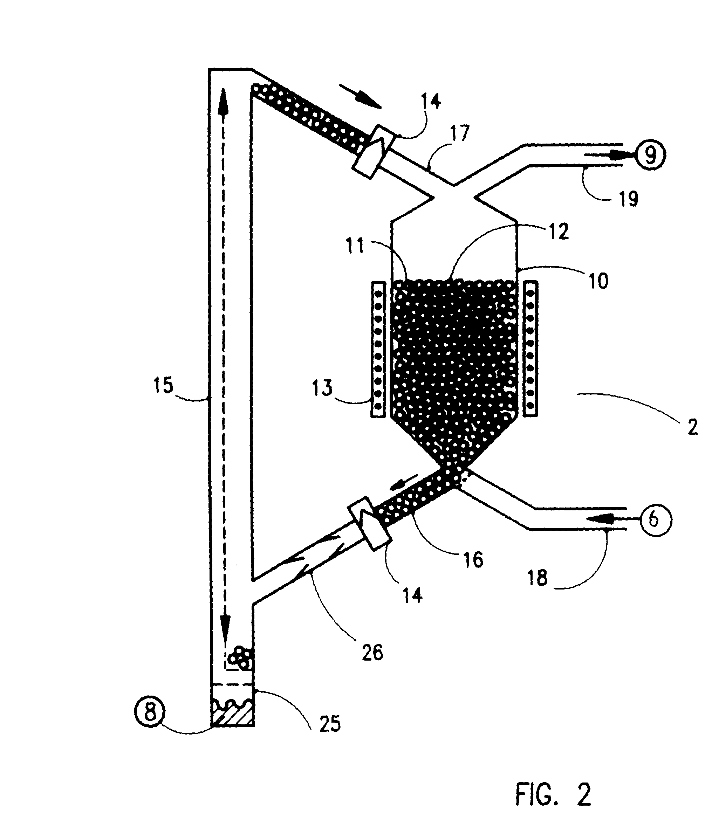

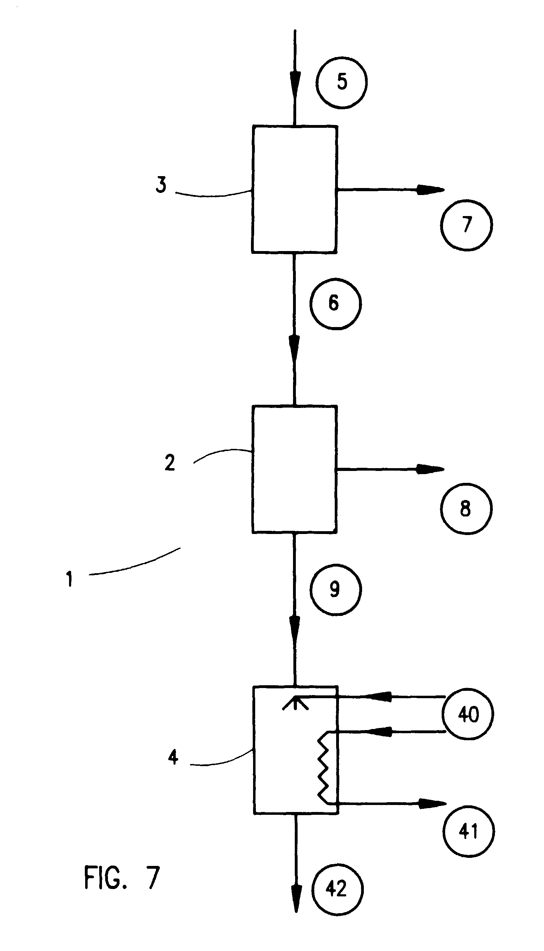

Dans cet exemple, on décrit un premier dispositif et procédé de pyrolyse en continu selon l'invention, dispositif représenté schématiquement par la figure 2 et la figure 7.

Ce dispositif (2) comprend :

a - une enceinte cylindrique (10) contenant des éléments solides (11) formant un empilement (12) et munie de moyens de chauffage par induction (13) de manière à chauffer toute la portion cylindrique dudit empilement.

b - à l'extrémité inférieure de l'enceinte (10), et terminée par une grille, une canalisation d'entrée (18) d'effluents fluides (6) provenant d'un dispositif de gazéification (3) et une canalisation de sortie (16) d'éléments solides à régénérer car chargés de produits solides.

c - à l'extrémité supérieure de l'enceinte (10), une canalisation d'entrée (17) des éléments solides (11) régénérés, c'est à dire présentant une surface débarrassée de produit solide et une canalisation de sortie (19) des produits gazeux (9) dirigés vers un dispositif de traitement (4) qui assure aussi l'aspiration des produits gazeux et donc la circulation des effluents fluides à travers l'empilement (12) des éléments solides (11).

d - des moyens annexes, isolés de l'enceinte (10) par des sas (14), permettant la séparation des produits solides (8) et le recyclage des éléments solides. Ainsi, la canalisation de sortie (16) des éléments solides à régénérer est dotée de moyens, typiquement des couteaux (26) en carbure de silicium pour délaminer les éléments solides (11) et séparer les produits solides (8). La canalisation de sortie (16) débouche à la base d'une colonne (15) terminée à son extrémité inférieure par une cendrier (25) surmonté d'une grille de manière à effectuer la séparation entre produit solide (8) à l'état pulvérulent et les éléments solides (11) totalement ou partiellement régénérés. La colonne (15) est munie de moyens, typiquement un élévateur mécanique pour faire circuler les éléments solides (11) et les élever de façon à pouvoir les introduire par la canalisation (17) à l'extrémité supérieure de l'enceinte (10).

Dans cette colonne (15), peut se poursuivre la régénération des éléments solides (11), soit par les contacts et les chocs subis par les éléments solides (11), soit éventuellement, en oxydant les produits solides restant à la surface des éléments solides dans le cas où du carbone s'est déposé, mais, comme déjà mentionné, le procédé selon l'invention évite de préférence la formation de $CO_2$. Selon d'autres modalités de réalisation, la colonne peut être équipée d'un tonneau tournant pour faciliter le nettoyage mécanique des éléments solides (11) et peut être aussi équipée, de préférence en sommet de colonne, d'un espace de stockage d'éléments solides régénérés en charge sur ladite enceinte.

e - des moyens, non représentés sur la figure 2, pour assurer la régulation et le fonctionnement en continu de l'ensemble du dispositif, en particulier des moyens pour actionner les divers sas (14) qui séparent l'enceinte (10) et la colonne (15), de manière à réguler la hauteur dudit empilement (12), la vitesse de circulation des éléments solides (11) et la puissance de chauffage par induction en fonction du flux d'effluents fluides à traiter, un tel flux n'étant pas nécessairement constant.

Dans le procédé de pyrolyse utilisant ce dispositif, les conditions opératoires restent en général stationnaires, en particulier la hauteur de l'empilement (12) et la température de transformation, et sont choisies de manière à ce que la totalité des effluents fluides soient transformés en produits solides et gazeux.

Cependant, le dispositif selon l'invention permet d'adapter la hauteur de l'empilement (12) à la charge d'effluents fluides à traiter. Dans ce cas, les moyens de chauffage (13) sont modulés en conséquence (diminution ou augmentation du nombre de spires inductrices).

Le procédé en continu de l'exemple 1 se déduit de la description du dispositif de l'exemple 1 décrit précédemment :

En régime de fonctionnement stationnaire, l'enceinte de pyrolyse (10) est le lieu d'une double circulation à contre-courant de deux flux, d'une part une circulation montante d'effluents fluides (6), introduits à la base de l'enceinte (10), qui disparaîssent progressivement pour donner naissance à des produits gazeux (9) évacués par la canalisation (19) à l'extrémité supérieure de l'enceinte (10), d'autre part une circulation descendante d'éléments solides (11) chargés progressivement en produits solides issus de la transformation des effluents fluides.

On règle la vitesse de ces deux flux, ainsi que la température des éléments solides (11), de manière à assurer une transformation pratiquement totale des effluents fluides.

Exemple 2

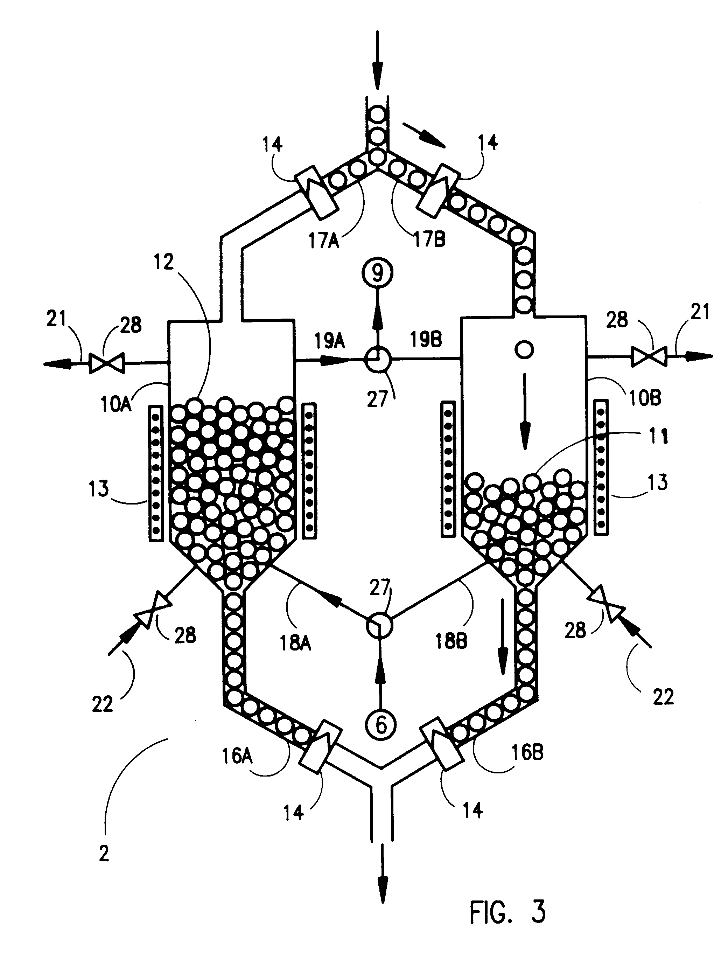

Dans cet exemple, on décrit un second dispositif et procédé de pyrolyse en discontinu (par batch) selon l'invention, comme représenté schématiquement sur la figure 3. Les moyens et fonctions analogues ont été repérés de la même manière sur les figures 2 et 3, ainsi que sur l'ensemble des figures.

Ce dispositif comprend essentiellement deux enceintes (10A et 10B) identiques mais à fonctionnement alterné, une enceinte en fonctionnement (10A), garnie d'éléments solides (11) formant un empilement (12), pyrolysant des effluents fluides, tandis que, dans l'autre une enceinte à l'arrêt (10B), les éléments solides (11) sont régénérés.

Chacune des deux enceintes est équipée d'un moyen de chauffage (13) et munie des mêmes canalisations que l'enceinte de l'exemple 1. Ainsi, dans le cas de la configuration de la figure 3, on a :

- une canalisation (16B) pour soutirer, à la base de l'enceinte à l'arrêt (10B), les éléments solides à régénérer.
- une canalisation (17B) pour introduire, à la partie supérieure de l'enceinte à l'arrêt (10B), les éléments solides régénérés.
- une canalisation (18A) pour alimenter l'enceinte en fonctionnement (10A) en effluents fluides (6).
- une canalisation (19A) pour évacuer, à la partie supérieure de l'enceinte en fonctionnement (10A) les produits gazeux (9) formés.

Sur la figure 3, n'ont pas été représentés les moyens de régénération et de circulation des éléments solides, ces moyens étant analogues à ceux de l'exemple 1.

Par contre, on a représenté sur la figure 3 la possibilité d'introduire un gaz dans les enceintes (10A,10B) à l'aide de canalisations (22), et d'évacuer un gaz de l'enceinte par des canalisations (21). Comme déjà mentionné, un tel gaz peut être introduit dans l'enceinte en fonctionnement de manière à favoriser la transformation des effluents fluides en produits gazeux préférés. Mais, par exemple si l'on souhaite réaliser un décapage oxydant des éléments solides (11) dans l'enceinte (10B) qui n'est pas en fonctionnement, on peut introduire dans cette enceinte de l'air ou de l'oxygène. Un tel décapage oxydant n'est de préférence utilisé que pour éliminer les restes de carbone déposé sur lesdits éléments solides (11), après que la plus grande partie desdits produits solides formés ait été séparée, par régénération mécanique, desdits éléments solides.

Le procédé dicontinu de l'exemple 2 se déduit directement de la description qui a été faite du dispositif correspondant. Il est avantageux de mettre en oeuvre le procédé de l'exemple 2 de manière à ne pas avoir à interrompre le flux d'effluents fluides (6). Pour cela, à l'aide de vannes de dérivation (27), on réoriente simultanément les flux de fluides entrant et sortant de manière à assurer un fonctionnement alterné des enceintes de pyrolyse (10) sans qu'il y ait interruption de l'alimentation en effluents fluides (6).

Exemple 3

Dans cet exemple, on décrit la pyrolyse de résidus chlorés de PCB (C12H2C15) à l'aide du dispositif décrit à l'exemple 1.

On a fabriqué une enceinte (10) ayant un volume utile de 1,2 m$^3$, un diamètre de 0,9 m et une hauteur de 2 m. Sa surface interne a été revêtue d'un pisé de carbure de silicium.

On l'a remplie de boulets sphériques en graphite recouverts de carbure de silicium (épaisseur de 0,2 mm). Ces boulets ont des diamètres différents (40 et 20 mm) pour réduire les pertes de charge et faciliter le remplissage, avec sensiblement autant de boulets de 40 mm que de boulets de 20 mm de diamètre. Une telle charge présente une surface de contact de l'ordre de 80 m$^2$ pour un empilement de 1,2 m$^3$, soit environ 65m$^2$/m$^3$.

On a chauffé l'enceinte (10) et sa charge de boulets (11) par induction à l'aide d'un solénoïde et d'un générateur de 100 kW fonctionnant sous 3 kHz. En régime stabilisé à 1500°C (température des boulets), la consommation a été de 30 kW.

On a alimenté cette enceinte en flux gazeux de PCB avec un débit de 430 kg/h. On a récupéré au niveau du cendrier 190 kg/h de carbone constituant ledit produit solide (8) et 241 kg/h d'HCl constituant ledit produit gazeux (9).

La récupération du carbone a été obtenue en faisant circuler la totalité de la charge de boulets environ 3 fois par heure. L'HCl a été envoyé dans un échangeur absorbeur (échangeur absorbeur type GM de la Société Le Carbone-Lorraine) pour fabriquer de l'acide chlorhydrique concentré à 33%, l'absorption d'HCl assurant la circulation des flux fluides (effluents et produits gazeux) dans l'enceinte de pyrolyse (10).

Exemple 4

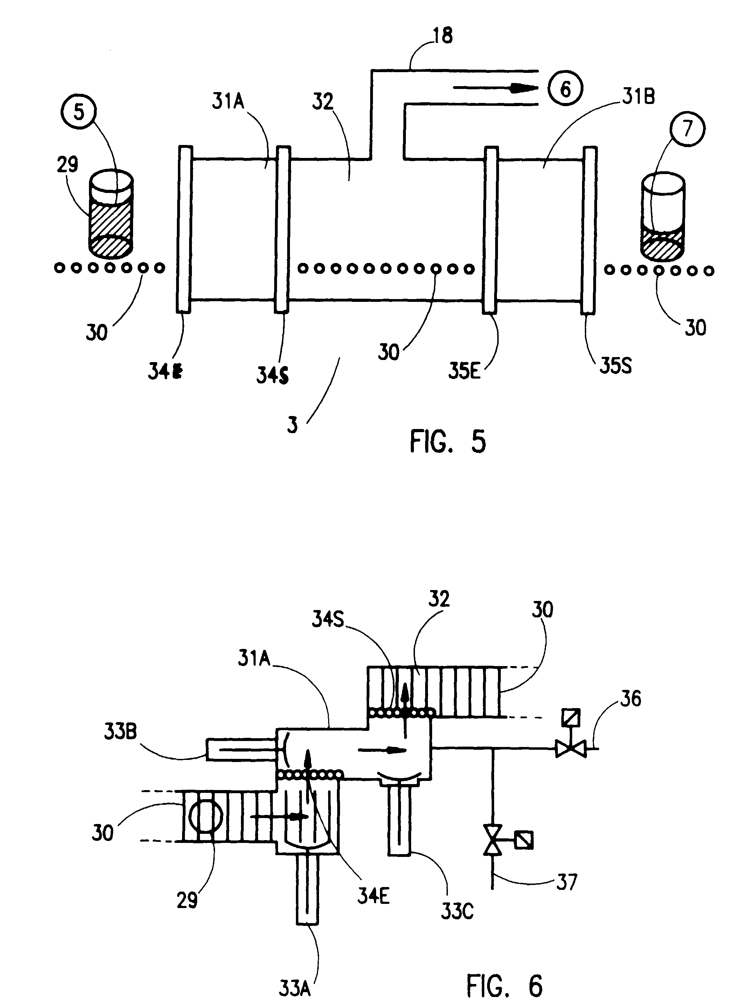

Dans cet exemple, on décrit un dispositif de gazéification (3), comme schématisé aux figures 5 et 6, servant à alimenter en effluents fluides (6) le dispositif de pyrolyse (2) selon l'invention.

La demanderesse a mis au point un dispositif de gazéification d'effluents (5) conditionnés en fûts métalliques (29) qui comporte des moyens de déplacement des fûts métalliques, schématisés sur les figures 5 et 6 par des rouleaux moteurs (30), une chambre de gazéification (32) munie de moyens de chauffage (non représentés sur la figure 5) portant la charge d'effluents à traiter entre 500 et 650°C, d'une conduite (18) de sortie des effluents fluides (6), et de deux sas, un sas d'entrée (31A) et un sas de sortie (31B) de manière à effectuer la gazéification sous atmosphère contrôlée et en particulier à l'abri de l'air. En sortie de chambre de gazéification, on récupére dans les fûts (29) des résidus solides (7).

La figure 5 représente un schéma général alors que la figure 6 montre en détail le fonctionnement d'un sas, le sas d'entrée (31A). Chaque sas est doté d'une porte d'entrée (34E, 35E) et d'une porte de sortie (34S, 35S), les déplacements des fûts dans le sas étant assurés par des vérins (33A, 33B, 33C).

Chaque sas est muni d'une prise de vide (36) et d'une alimentation en gaz inerte (37), généralement de l'azote, de manière à assurer le contrôle de l'atmosphère gazeuse dans chaque sas.

Exemple 5

L'ensemble de l'unité est représenté schématiquement à la figure 7. Sur cette figure, les repères cerclés désignent des matières et les repères non cerclés des dispositifs ou équipements.

Dans cet exemple, on décrit une unité de pyrolyse complète (1) de traitement de résidus chlorés (PCB) comprenant l'installation en série d'un dispositif de gazéification (3) tel que décrit à l'exemple 4, d'un dispositif de pyrolyse (2) tel que décrit à l'exemple 1 et d'un échangeur absorbeur d'HCl (4) du commerce alimenté en eau (40) et fournissant de l'acide chlorhydrique concentré (42) et de la vapeur d'eau surchauffée (41).

Exemple 6

Cet exemple ne diffère de l'exemple 3 que sur les points suivants :

- on a utilisé des boulets de 80 mm de diamètre (au lieu de boulets de 40 mm de diamètre dans l'exemple 3).
- il en est résulté une surface de contact de 60 $m^2$ au lieu de 80 $m^2$ dans l'exemple 3, soit environ 50 $m^2$ de surface par $m^3$ (au lieu de 65 dans l'exemple 3).
- on a utilisé un générateur de 100 kW fonctionnant sous 6 kHz (au lieu de 3 kHz dans l'exemple 3).

On a ainsi obtenu des résultats comparables à ceux obtenus à l'exemple 3.

Exemple 7

On a étudié la répartition de la température des boulets en graphite, dans une enceinte (10) en béton, chauffés par induction (en l'absence de toute réaction de pyrolyse).

Pour cela, on a utilisé 630 boulets de 60 mm de diamètre (boulets en graphite pack-cémenté) que l'on a empilés dans une enceinte en béton de 50 cm de diamètre et 100 cm de hauteur en tout. On a recouvert l'empilement d'une couche de laine minérale.

On a placé en différents endroits de l'empilement des boulets instrumentés avec des thermocouples (thermocouples Chromel-Alumel 1 mm placés à l'intérieur des boulets) de manière à obtenir en temps réel la montée en température et la distribution de température au sein de l'enceinte.

Le chauffage de l'enceinte a été obtenu avec un inducteur de 60 kW de puissance avec une fréquence de 8,4 kHz. Durant tout l'essai, on a maintenu un léger flux d'azote (insuffisant pour avoir une action significative sur la température).

Résultats :

- on a chauffé les boulets vers 1000°C en 45 min, avec une vitesse de montée moyenne de 1333°C/h et une vitesse maximum de 1800°C/h entre 150 et 600°C.
- on a pris la température du boulet instrumenté situé au centre de l'empilement - température la plus élevée - comme température de référence (température = 990 °C). Ce boulet central est dans le plan horizontal de référence et sur l'axe central de référence.
- on a noté un écart maximum de 200 °C entre deux boulets situés sur un même axe vertical, l'un étant situé dans le plan de référence et l'autre situé dans le plan horizontal du sommet de l'empilement.
- on a noté un écart maximum de 160°C entre deux boulets situés dans un même plan horizontal, l'un étant sur l'axe central, l'autre étant à la périphérie de l'enceinte.

Des essais complémentaires ont montré que, dans le cas d'une pyrolyse réelle, ces écarts de température étaient fortement diminués.

AVANTAGES DE L'INVENTION

Si l'on compare tout d'abord le procédé selon l'invention et un procédé d'incinération de PCB selon l'art antérieur, on obtient par kg de PCB traité :

|  | selon art antérieur (incinération) | selon invention |
|---|---|---|
| HCl | 15 moles | 15 moles |
| CO2 | 37 moles | (0) |
| N2 | 122 moles | (0) |

Ces écarts sur CO2 et N2 ont des conséquences de deux ordres : D'une part, le volume de produits gazeux à absorber sortant du dispositif de pyrolyse étant 13 fois plus grand avec le procédé de l'art antérieur qu'avec le procédé selon l'invention, le volume de l'échangeur absorbeur nécessaire, et donc le coût des équipements, sera sensiblement dans un rapport de 13/3 d'après des ratios éprouvés, connus en génie chimique.

D'autre part, le procédé selon l'invention ne conduit pas à la formation de CO2.

Les avantages techniques et économiques de l'invention sont nombreux : grande compacité du dispositif de pyrolyse et donc faible coût d'investissement, grande souplesse et polyvalence de fonctionnement, faible coût de fonctionnement (rendement énergétique élevé, peu ou pas de matières consommables, procédé automatisable).

Le procédé et les dispositifs selon l'invention trouvent une application avantageuse pour la destruction d'effluents chlorés.

**Revendications**

1. Procédé de pyrolyse d'effluents fluides, comprenant l'introduction desdits effluents (6) dans une enceinte de pyrolyse (10) contenant une pluralité d'éléments solides (11), le chauffage desdits effluents (6) à une température de transformation où ils sont transformés en produits solides (8) et gazeux (9), l'évacuation desdits produits gazeux (9) de ladite enceinte (10), le captage desdits produits solides (8) à la surface desdits éléments solides (11) durant la transformation desdits effluents (6), la regénération desdits éléments solides (11) par élimination desdits produits solides (8) déposés sur lesdits éléments solides (11), la circulation desdits éléments solides (11), caractérisé en ce que lesdits éléments solides (11) sont portés à une température supérieure à ladite température de transformation et sont émetteurs de flux thermique, et en ce que lesdits effluents (6) sont chauffés à ladite température de transformation au contact desdits éléments solides (11), en traversant un empilement (12) desdits éléments solides (11) offrant une surface de contact par unité de volume au moins égale à 10 m2/m3.

2. Procédé selon la revendication 1 dans lequel lesdits éléments solides (11) comprennent au moins une partie conductrice électrique, de manière à pouvoir être chauffés soit par induction, soit par effet Joule.

3. Procédé selon la revendication 2 dans lequel on chauffe lesdits éléments solides (11) par induction.

4. Procédé selon une quelconque des revendications 2 et 3 dans lequel chaque élément solide (11) est constitué de deux matériaux différents, l'un en matériau conducteur électrique constituant le noyau central dudit élément solide, l'autre en matériau réfractaire constituant une couche externe formant un revêtement dudit noyau.

5. Procédé selon une quelconque des revendications 2 et 3 dans lequel chaque élément solide (11) est constitué d'un seul matériau conducteur électrique.

6. Procédé selon une quelconque des revendications 4 et 5 dans lequel ledit matériau conducteur électrique est choisi parmi le graphite, les métaux réfractaires, les céramiques conductrices choisies parmi les carbures, siliciures ou borures de métaux.

7. Procédé selon la revendication 4 dans lequel ledit matériau réfractaire est choisi parmi le graphite, les métaux réfractaires, les céramiques conductrices ou isolantes choisies parmi les oxydes, carbures, nitrures, siliciures ou borures de métaux.

8. Procédé selon une quelconque des revendications 1 à 7 dans lequel lesdits éléments solides (11) présentent la forme d'une bille de diamètre compris entre 10 et 150 mm.

9. Procédé selon une quelconque des revendications 4, 6 à 8 dans lequel on choisit de préférence des éléments solides (11) ayant la forme d'une bille avec un noyau central en graphite et une couche réfractaire en carbure de silicium formant revêtement, d'épaisseur comprise entre 0,1 et 2 mm.

10. Procédé selon une quelconque des revendications 1 à 9 dans lequel ladite enceinte (10) est tubulaire et en matériau réfractaire choisi parmi le carbure de silicium, l'alumine, l'alumine renforcée, les composites carbone-carbone revêtus de carbure de silicium, le béton.

11. Procédé selon une quelconque des revendications 1 à 10 dans lequel lesdits éléments solides (11) sont fixes et forment un empilement (12) fixe dans ladite enceinte (10) durant ladite transformation des effluents fluides (6).

12. Procédé selon la revendication 11 dans lequel on utilise deux enceintes (10A, 10B) en alternance de manière à pouvoir éliminer lesdits produits solides (8) déposés sur lesdits éléments solides (11) d'une première enceinte à l'arrêt, tandis qu'une seconde enceinte est en fonctionnement.

13. Procédé selon une quelconque des revendications 1 à 10 dans lequel, de préférence, lesdits éléments solides (11) sont mobiles et forment un empilement (12) stationnaire dans ladite enceinte (10) durant ladite transformation des effluents fluides (6).

14. Procédé selon la revendication 13 dans lequel on introduit des éléments solides (11) dans ladite enceinte (10) à une extrémité dudit empilement (12) et on retire de ladite enceinte (10), à l'autre extrémité dudit empilement (12), des éléments solides (11) chargés desdits produits solides (8), de manière à assurer aux éléments solides (11) un temps de séjour moyen prédéterminé dans ladite enceinte (10).

15. Procédé selon une quelconque des revendications 1 à 14 dans lequel lesdits éléments solides (11) sont chauffés au sein de ladite enceinte (10).

16. Procédé selon une quelconque des revendications 13 à 14 dans lequel lesdits éléments solides (11) sont chauffés hors de ladite enceinte (10) et puis sont introduits dans ladite enceinte (10).

17. Procédé selon une quelconque des revendications 1 à 16 dans lequel on introduit dans ladite enceinte (10) un gaz ou une vapeur non oxydante en vue de modifier ladite transformation des effluents fluides (6) en produits solides (8) et gazeux (9).

18. Procédé selon une quelconque des revendications 1 à 17 dans lequel ledit effluent fluide (6) est un composé organochloré, comprenant C, H, Cl, dans lequel ledit produit solide (8) comprend du carbone et dans lequel ledit produit gazeux (9) comprend HCl.

19. Procédé selon une quelconque des revendications 1 à 18 dans lequel ladite température de transformation est comprise entre 600 et 2600°C selon la nature des effluents fluides (6) à traiter.

20. Dispositif de pyrolyse pour mettre en oeuvre le procédé selon une quelconque des revendications 1 à 19 comprenant au moins une enceinte en matériau réfractaire (10) contenant une pluralité d'éléments solides (11), des moyens de chauffage (13) desdits éléments solides, des moyens d'alimentation de l'enceinte en effluents fluides (6), des moyens de circulation et de regénération desdits éléments solides, des moyens d'évacuation desdits produits solides (8) et desdits produits gazeux (9), caractérisé en ce que lesdits éléments solides (11) forment un empilement (12) permettant la circulation desdits effluents fluides (6) et desdits produits gazeux (9), en ce que ledit empilement (12) offre une surface de contact par unité de volume au moins égale à 10 m2/m3 et en ce que lesdits éléments solides (11) sont émetteurs de flux thermique.

21. Dispositif de pyrolyse selon la revendication 20 comprenant, de préférence, une enceinte (10), des canalisations d'entrée (17) et de sortie (16) des éléments solides (11), des canalisations d'entrée (18) des effluents fluides (6) et de sortie (19) des produits gazeux (9), une colonne (15) permettant de faire circuler les éléments solides (11), des sas (14) séparant l'enceinte (10) et la colonne (15), de manière à permettre l'introduction en continu desdits éléments solides à une extrémité dudit empilement (12) dans ladite enceinte durant la pyrolyse alors que des éléments solides chargés desdits produits solides sont extraits de ladite enceinte à l'autre extrémité dudit empilement, de manière à déplacer lesdits éléments au sein dudit empilement tout en maintenant ledit empilement en état stationnaire et de manière à assurer un temps de séjour prédéterminé desdits éléments dans ladite enceinte, selon la vitesse de dépôt desdits produits solides sur lesdits éléments solides.

22. Dispositif de pyrolyse selon la revendication 21 comprenant des moyens de séparation (26) des produits solides (8) et des éléments solides (11) permettant de regénérer lesdits éléments solides (11) avant de les réintroduire dans ladite enceinte (10).

23. Dispositif de pyrolyse selon la revendication 20 comprenant deux enceintes (10A, 10B) fonctionnant en alternance, de manière à pouvoir régénérer lesdits éléments solides (11) d'une enceinte à l'arrêt tandis que l'autre est en fonctionnement.

24. Unité de pyrolyse comprenant un dispositif de pyrolyse selon une quelconque des revendications 20 à 23, un dispositif de gazéification (3) alimentant ledit dispositif de pyrolyse (2) en effluents fluides (6) et un dispositif de traitement (4) desdits produits gazeux (9) sortant dudit dispositif de pyrolyse (2).

25. Unité de pyrolyse selon la revendication 24 dans laquelle, de manière à valoriser lesdits produits gazeux (9), on fait réagir au moins une partie desdits produits gazeux (9) avec au moins un autre produit chimique dans ledit dispositif de traitement (4).

26. Unité de pyrolyse selon une quelconque des revendications 24 à 25 dans laquelle ledit dispositif de gazéification (3) est alimenté en produits organo-chlorés et dans lequel ledit dispositif de traitement (4) transforme ledit produit gazeux (9) comprenant HCl en une solution aqueuse commerciale de HCl.

**Patentansprüche**

1. Verfahren zur Pyrolyse fluider Abströme, das die Einführung der Abströme (6) in einen Pyrolysebehälter (10), der eine Mehrzahl fester Elemente (11) enthält, die Erhitzung der Abströme (6) auf eine Umwandlungstemperatur, wo sie in feste (8) und gasförmige Stoffe (9) umgewandelt werden, die Abführung der gasförmigen Stoffe (9) aus dem Behälter (10), die Aufnahme der festen Stoffe (8) an der Oberfläche der festen Elemente (11) während der Umwandlung der Abströme (6), die Regeneration der festen Elemente (11) durch Entfernung der auf den festen Elementen (11) abgeschiedenen festen Stoffe (8) und den Umlauf der festen Elemente (11) aufweist,
dadurch gekennzeichnet,
daß die festen Elemente (11) auf eine Temperatur über der Umwandlungstemperatur gebracht werden und Wärmeflußabgeber sind und daß die Abströme (6) im Kontakt mit den festen Elementen (11) auf die Umwandlungstemperatur erhitzt werden, während sie einen Stapel (12) der festen Elemente (11) durchströmen, der eine Kontaktoberfläche je Volumeneinheit von wenigstens gleich 10 $m^2/m^3$ bietet.

2. Verfahren nach dem Anspruch 1, bei dem die festen Elemente (11) wenigstens einen elektrisch leitenden Teil derart haben, um entweder durch Induktion oder durch Joule-Effekt erhitzt werden zu können.

3. Verfahren nach dem Anspruch 2, bei dem man die festen Elemente (11) durch Induktion erhitzt.

4. Verfahren nach irgendeinem der Ansprüche 2 und 3, bei dem jedes feste Element (11) aus zwei verschiedenen Materialien zusammengesetzt ist, dem einen aus einem elektrisch leitenden Material, das den zentralen Kern des festen Elements bildet, und dem anderen aus feuerfestem Material, das eine äußere, eine Beschichtung dieses Kerns bildende Schicht darstellt.

5. Verfahren nach irgendeinem der Ansprüche 2 und 3, bei dem jedes feste Element (11) aus einem einzigen elektrisch leitenden Material besteht.

6. Verfahren nach irgendeinem der Ansprüche 4 und 5, bei dem das elektrisch leitende Material unter dem Graphit, den feuerfesten Metallen und den unter den Metallcarbiden, -siliciden oder -boriden gewählten leitenden Keramiken gewählt wird.

7. Verfahren nach dem Anspruch 4, bei dem das feuerfeste Material unter dem Graphit, den feuerfesten Metallen und den unter den Metalloxiden, -carbiden, -nitriden, -siliciden oder -boriden gewählten leitenden oder isolierenden Keramiken gewählt wird.

8. Verfahren nach irgendeinem der Ansprüche 1 bis 7, bei dem die festen Elemente (11) die Form einer Kugel eines Durchmessers im Bereich von 10 bis 150 mm aufweisen.

9. Verfahren nach irgendeinem der Ansprüche 4, 6 bis 8, bei dem man vorzugsweise feste Elemente (11), die die Form einer Kugel aufweisen, mit einem zentralen Kern aus Graphit und einer die Beschichtung bildenden feuerfesten Schicht aus Siliciumcarbid einer Dicke im Bereich von 0,1 bis 2 mm wählt.

10. Verfahren nach irgendeinem der Ansprüche 1 bis 9, bei dem der Behälter (10) rohrförmig und aus feuerfestem Material ist, das unter dem Siliciumcarbid, dem Aluminiumoxid, dem verstärkten Aluminiumoxid, den Verbundmaterialien aus Kohlenstoff und mit Siliciumcarbid beschichtetem Kohlenstoff und dem Beton gewählt ist.

11. Verfahren nach irgendeinem der Ansprüche 1 bis 10, bei dem die festen Elemente (11) festgelegt sind und einen festen Stapel (12) im Behälter (10) während der Umwandlung der fluiden Abströme (6) bilden.

12. Verfahren nach dem Anspruch 11, bei dem man zwei Behälter (10A, 10B) abwechselnd derart verwendet, um die auf den festen Elementen (11) eines ersten Behälters abgeschiedenen festen Stoffe (8) bei Abschaltung entfernen zu können, während ein zweiter Behälter in Betrieb ist.

13. Verfahren nach irgendeinem der Ansprüche 1 bis 10, bei dem die festen Elemente (11) vorzugsweise beweglich sind und einen stationären Stapel (12) im Behälter (10) während der Umwandlung der fluiden Abströme (6) bilden.

14. Verfahren nach dem Anspruch 13, bei dem man feste Elemente (11) in den Behälter (10) an einem Ende des Stapels (12) einführt und man aus dem Behälter (10) am anderen Ende des Stapels (12) mit den festen Stoffen (8) beladene feste Elemente (11) derart abführt, um für die festen Elemente (11) eine vorbestimmte mittlere Verweilszeit im Behälter (10) zu sichern.

15. Verfahren nach irgendeinem der Ansprüche 1 bis 14, bei dem die festen Elemente (11) im Inneren des Behälters (10) erhitzt werden.

16. Verfahren nach irgendeinem der Ansprüche 13 und 14, bei dem die festen Elemente (11) außerhalb des Behälters (10) erhitzt und danach in den Behälter (10) eingeführt werden.

17. Verfahren nach irgendeinem der Ansprüche 1 bis 16, bei dem man in den Behälter (10) ein Gas oder einen nichtoxidierenden Dampf mit dem Zweck einführt, die Umwandlung der fluiden Abströme (6) in feste (8) und gasförmige Stoffe (9) zu modifizieren.

18. Verfahren nach irgendeinem der Ansprüche 1 bis 17, bei dem der fluide Abstrom (6) eine Organochlorverbindung ist, die C, H und Cl aufweist, wobei der feste Stoff (8) Kohlenstoff aufweist und wobei der gasförmige Stoff (9) HCl aufweist.

19. Verfahren nach irgendeinem der Ansprüche 1 bis 18, bei dem die Umwandlungstemperatur je nach der Art der zu behandelnden fluiden Abströme (6) im Bereich von 600 bis 2600 °C ist.

20. Pyrolysevorrichtung zur Durchführung des Verfahrens nach irgendeinem der Ansprüche 1 bis 19, die wenigstens einen Behälter (10) aus feuerfestem Material, der eine Mehrzahl fester Elemente (11) enthält, Mittel (13) zur Erhitzung der festen Elemente, Mittel zum Speisen des Behälters mit fluiden Abströmen (6), Mittel zum Umlauf und zur Regeneration der festen Elemente und Mittel zur Abführung der festen Stoffe (8) und der gasförmigen Stoffe (9) aufweist, dadurch gekennzeichnet, daß die festen Elemente (11) einen Stapel (12) bilden, der den Durchstrom der fluiden Abströme (6) und der gasförmigen Stoffe (9) ermöglicht, daß der Stapel (12) eine Kontaktoberfläche je Volumeneinheit von wenigstens gleich 10 m$^2$/m$^3$ bietet und daß die festen Elemente (11) Wärmeflußabgeber sind.

21. Pyrolysevorrichtung nach dem Anspruch 20, die vorzugsweise einen Behälter (10), Leitungen zum Eintritt (17) und zum Austritt (16) der festen Elemente (11), Leitungen zum Eintritt (18) der fluiden Abströme (6) und zum Austritt (19) der gasförmigen Stoffe (9), eine Säule (15), die ein Umlaufenlassen der festen Elemente (11) ermöglicht, Schleusen (14), die den Behälter (10) und die Säule (15) derart trennen, um die kontinuierliche Einführung der festen Elemente am einen Ende des Stapels (12) in den Behälter während der Pyrolyse zu ermöglichen, während mit den festen Stoffen beladene feste Elemente aus dem Behälter am anderen Ende des Stapels derart abgeführt werden, um die Elemente im Inneren des Stapels zu verschieben, wobei gleichzeitig der Stapel im stationären Zustand und derart aufrecht erhalten wird, um eine vorbestimmte Verweilszeit der Elemente im Behälter je nach der Abscheidegeschwindigkeit der festen Stoffe auf den festen Elementen zu sichern.

22. Pyrolysevorrichtung nach dem Anspruch 21, die Mittel (26) zur Trennung der festen Stoffe (8) und der festen Elemente (11) aufweist, die eine Regeneration der festen Elemente (11) vor deren Wiedereinführung in den Behälter (10) ermöglichen.

23. Pyrolysevorrichtung nach dem Anspruch 20, die zwei abwechselnd funktionierende Behälter (10A, 10B) derart aufweist, um die festen Elemente (11) eines Behälters im Stillstand regenerieren zu können, während der andere in Betrieb ist.

24. Pyrolyseeinheit, die eine Pyrolysevorrichtung nach irgendeinem der Ansprüche 20 bis 23, eine Vergasungseinrichtung (3), die die Pyrolysevorrichtung (2) mit fluiden Abströmen (6) speist, und eine Einrichtung (4) zur Behandlung der aus der Pyrolysevorrichtung (2) austretenden gasförmigen Stoffe (9) aufweist.

25. Pyrolyseeinheit nach dem Anspruch 24, in der man derart, um die gasförmigen Stoffe (9) zu verwerten, wenigstens einen Teil der gasförmigen Stoffe (9) mit wenigstens einem anderen chemischen Stoff in der Behandlungseinrichtung (4) reagieren läßt.

26. Pyrolyseeinheit nach irgendeinem der Ansprüche 24 und 25, in der die Vergasungseinrichtung (3) mit Organochlorstoffen gespeist wird und in der die Behandlungseinrichtung (4) den gasförmigen, HCl aufweisenden Stoff (9) in eine handelsübliche wäßrige HCl-Lösung umwandelt.

## Claims

1. A process for the pyrolysis of fluid effluents, comprising introducing said effluents (6) into a pyrolysis chamber (10) containing a plurality of solid elements (11), heating said effluents (6) to a transformation temperature at which they are transformed into solid (8) and gaseous (9) products, discharging said gaseous products (9) from said chamber (10), trapping said solid products (8) at the surface of said solid elements (11) during the transformation of said effluents (6), regenerating said solid elements (11) by eliminating said solid products (8) deposited on said solid elements (11), circulating said solid elements (11), characterised in that said solid elements (11) are brought to a temperature above said transformation temperature, and emit a heat flow, and in that said effluents (6) are heated to said transformation temperature in contact with said solid elements (11), passing through a pile (12) of said solid elements (11) offering a contact surface per volume unit which is at least equal to 10 $m^2/m^3$.

2. A process according to Claim 1, wherein said solid elements (11) comprise at least one electrically conductive part, in such a way as to be able to be heated either by induction or by Joule effect.

3. A process according to Claim 2, wherein said solid elements (11) are heated by induction.

4. A process according to either Claim 2 or Claim 3, wherein each solid element (11) is constituted by two different materials, one being of an electrically conductive material forming the central core of said solid element, the other being of a refractory material forming an outer layer covering said core.

5. A process according to either Claim 2 or Claim 3, wherein each solid element (11) is made up by a single electrically conductive material.

6. A process according to either Claim 4 or Claim 5, wherein said electrically conductive material is selected from graphite, refractory metals, conductive ceramics chosen from among carbides, silicides or borides of metals.

7. A process according to Claim 4, wherein said refractory material is selected from graphite, refractory metals, conductive or insulating ceramics chosen from among oxides, carbides, nitrides, silicides or borides of metals.

8. A process according to any one of Claims 1 to 7, wherein said solid elements (11) are in the form of a ball with a diameter of between 10 and 150 mm.

9. A process according to any one of Claims 4, 6 to 8, wherein solid elements (11) are preferably selected which are in the form of a ball with a central graphite core and a silicon carbide refractory layer forming a covering and being of between 0.1 and 2 mm in thickness.

10. A process according to any one of Claims 1 to 9, wherein said chamber (10) is tubular and made of refractory material selected from silicon carbide, alumina, reinforced alumina, carbon-carbon composites coated with silicon carbide and concrete.

11. A process according to any one of Claims 1 to 10, wherein said solid elements (11) are fixed and form a fixed pile (12) in said chamber (10) during said transformation of the fluid effluents (6).

12. A process according to Claim 11, wherein two chambers (10A, 10B) are used in alternating manner, in such a way as to be able to eliminate said solid products (8) deposited on said solid elements (11) from a first stationary chamber whilst a second chamber is operating.

13. A process according to any one of Claims 1 to 10, wherein said solid elements (11) are preferably mobile and form a stationary pile (12) in said chamber (10) during said transformation of the fluid effluents (6).

14. A process according to Claim 13, wherein solid elements (11) are introduced into said chamber (10) at one end of said pile (12), and drawn off from said chamber (10) at the other end of said pile (12) are solid elements (11) charged with said solid products (8), in such a way as to ensure that the solid elements (11) have a predetermined average residence time in said chamber (10).

15. A process according to any one of Claims 1 to 14, wherein said solid elements (11) are heated within said chamber (10).

16. A process according to either Claim 13 or Claim 14, wherein said solid elements (11) are heated outside said chamber (10) and then introduced into said chamber (10).

17. A process according to any one of Claims 1 to 16, wherein a gas or non-oxidising vapour is introduced into said chamber (10) in order to modify said transformation of the fluid effluents (6) into solid (8) and gaseous (9) products.

18. A process according to any one of Claims 1 to 17, wherein said fluid effluent (6) is an organochlorine compound comprising C, H, Cl, wherein said solid product (8) comprises carbon, and wherein said gaseous product (9) comprises HCl.

19. A process according to any one of Claims 1 to 18, wherein said transformation temperature is between 600 and 2600°C depending on the type of fluid effluents (6) to be treated.

20. A pyrolysis apparatus for carrying out the process according to any one of Claims 1 to 19, comprising at least one chamber of refractory material (10) containing a plurality of solid elements (11), means for heating (13) said solid elements, means for supplying fluid effluents (6) to the chamber, means for circulating and regenerating said solid elements, means for discharging said solid products (8) and said gaseous products (9), characterised in that said solid elements (11) form a pile (12) permitting circulation of said fluid effluents (6) and of said gaseous products (9), and in that said pile (12) offers a contact surface per volume unit which is at least equal to 10 $m^2/m^3$, and in that said solid elements (11) emit heat flow.

21. A pyrolysis apparatus according to Claim 20, preferably comprising a chamber (10), intake (17) and outlet (16) ducts for solid elements (11), intake (18) ducts for fluid effluents (6) and outlet (19) ducts for the gaseous products (9), a column (15) making it possible to circulate the solid elements (11), locks (14) separating the chamber (10) and the column (15), in such a way as to permit the continuous introduction of said solid elements at one end of said pile (12) into said chamber during pyrolysis, whilst solid elements charged with said solid products are drawn off from said chamber at the other end of said pile, in such a way as to displace said elements within said pile whilst keeping said pile in a stationary state, and in such a way as to ensure a predetermined residence time for said elements in said chamber, as a function of the deposition rate of said solid products on said solid elements.

22. A pyrolysis apparatus according to Claim 21, comprising means for separating (26) the solid products (8) and solid elements (11) to permit regeneration of said solid elements (11) prior to their reintroduction into said chamber (10).

**23.** A pyrolysis apparatus according to Claim 20, comprising two chambers (10A, 10B) which operate in alternating manner, in such a way as to be able to regenerate said solid elements (11) of one stationary chamber whilst the other is operating.

**24.** A pyrolysis unit comprising a pyrolysis apparatus according to any one of Claims 20 to 23, a gasification device (3) which supplies said pyrolysis apparatus (2) with fluid effluents (6) and a device for treating (4) said gaseous products (9) issuing from said pyrolysis apparatus (2).

**25.** A pyrolysis unit according to Claim 24, wherein, in order to valorize said gaseous products (9), at least a part of said gaseous products (9) is reacted with at least one other chemical product in said treatment device (4).

**26.** A pyrolysis unit according to either Claim 24 or Claim 25, wherein said gasification device (3) is supplied with organochlorine products and wherein said treatment device (4) transforms said gaseous product (9) comprising HCl into a commercial aqueous HCl solution.

FIG. 1

FIG. 2

FIG. 3

FIG. 4a

FIG. 4b

FIG. 5

FIG. 6

FIG. 7